# EUROPÄISCHE PATENTSCHRIFT

(11) **EP 1 090 603 B1**
(45) Veröffentlichungstag und Bekanntmachung des Hinweises auf die Patenterteilung: **19.10.2005**
(21) Anmeldenummer: 00119240.0
(22) Anmeldetag: 06.09.2000
(51) Int. Cl.: A61C 1/08, A61C 13/003

(54) **Bausatz zum Erstellen einer Zahnbrücke**
Kit for making a dental bridge
Ensemble pour réaliser un bridge dentaire

(30) Priorität: 06.10.1999 DE 19948393
(43) Veröffentlichungstag der Anmeldung: 11.04.2001
(73) Patentinhaber: Wennemann, Ulrich, 79224 Umkirch (DE)
(72) Erfinder: Wennemann, Ulrich, 79224 Umkirch (DE)
(74) Vertreter: Patent- und Rechtsanwaltssozietät Maucher, Börjes & Kollegen

(56) Entgegenhaltungen:
- DE-C- 684 665
- US-A- 2 634 501
- US-A- 3 011 259
- US-A- 5 934 907

## Beschreibung

Die Erfindung betrifft einen Bausatz zum Erstellen einer Zahnbrücke. Dieser Bausatz enthält eine Vorrichtung zum Bearbeiten der Nachbarzähne einer Zahnlücke für das Einsetzen einer wenigstens einen fehlenden Zahn ersetzenden Zahnbrücke, mit einem Bearbeitungswerkzeug zum Abtragen von Zahnmaterial, insbesondere einem Schleifwerkzeug, und mit einer am Gebiß des Patienten befestigbaren Halterung, an der eine verstellbare Positioniereinrichtung zum geführten Positionieren des Bearbeitungswerkzeugs angeordnet ist, die eine Schiebeführung mit einem relativ zu der Halterung an Führungsleisten oder Führstangen verschiebbar gelagerten Schlittenteil aufweist, welches das Bearbeitungswerkzeug führt.

Aus DE-PS 684 665 kennt man bereits eine derartige Vorrichtung, bei der zwischen der Halterung und der Schiebeführung eine Schwenklagerung angeordnet ist, mittels der die Schiebeführung bei in Gebrauchsstellung befindlicher Vorrichtung um eine etwa rechtwinklig zur Ebene der Kauflächen der Zähne orientierte Schwenkachse verschwenkbar mit der Halterung verbunden ist. Die Schwenklagerung weist eine mit der Halterung fest verbundene Schwenkachse auf, auf der eine Buchse drehbar und axial verschiebbar angeordnet ist, an der die Schiebeführung befestigt ist.

Zum Einbau einer Zahnbrücke wird zunächst die Vorrichtung mit der Halterung am Gebiß des Patienten befestigt. Dann werden die Nachbarzähne der zu überbrückenden Zahnlücke zunächst mit der Vorrichtung beschliffen und in eine Form gebracht, die für eine Verankerung der Zahnbrücke an den Nachbarzähnen geeignet ist. Dabei ist das Bearbeitungswerkzeug an dem Schlittenteil exakt parallel geführt. Die Form, in welche die Nachbarzähne gebracht werden, ist von der Form der für die Zahnbrücke vorgesehenen Verankerungselemente abhängig.

Danach werden in die Nachbarzähne der zu überbrückenden Zahnlükke Bohrungen zum Einsetzen von Stiften eingebracht, die zur Verankerung der Zahnbrücke dienen. Dazu wird das an dem Schlittenteil geführte Bearbeitungswerkzeugs zunächst an der für die jeweilige Bohrung vorgesehenen Stelle des Nachbarzahnes positioniert, wobei das Schlittenteil gegebenenfalls gegenüber der Halterung in die entsprechende Lage verschwenkt und/oder verschoben wird. Danach wird das Bearbeitungswerkzeug zum Einbringen der Bohrung in das Zahnmaterial abgesenkt, indem die Buchse, an der die Schiebeführung befestigt ist, entlang der Schwenkachse entsprechend verschoben wird.

Nach dem alle Bohrungen fertiggestellt sind, werden die bereitgehaltenen Stifte in die Bohrungen eingesetzt und mit Hilfe einer aushärtenden Zahnabdruckmasse wird ein Abdruck des Gebisses des Patienten angefertigt. Die breiige oder teigige Zahnabdruckmasse wird dazu in eine im Querschnitt etwa U-förmige, an die Form des Gebisses des Patienten angepaßte Schiene eingefüllt, die dann zusammen mit dem darin befindlichen Zahnabdruckmaterial auf das Gebiß des Patienten aufgesteckt wird. Nachdem die Zahnabdruckmasse in der Mundhöhle zu einer festen, aber noch elastisch verformbaren Masse ausgehärtet ist, wird die Schiene mit der Zahnabdruckmasse vom Gebiß des Patienten abgezogen. An den beschliffenen und gebohrten Nachbarzähnen wird dann ein Provisorium angebracht, das die Nachbarzähne bis zum Einbau der Zahnbrücke vor Beschädigung schützt.

Mit Hilfe des Zahnabdrucks fertigt ein Zahntechniker im Labor ein Modell des Gebisses des Patienten an. In die Negativform des Zahnabdrucks wird dazu ein aushärtendes, das spätere Modell bildende Material eingefüllt, beispielsweise Gips. Nachdem das Modell ausgehärtet ist, wird der Zahnabdruck von dem Modell abgezogen und anhand des Modells wird die Zahnbrücke manuell angefertigt. Dabei werden die Verankerungselemente der Zahnbrücke in ihrer Form individuell und möglichst genau an die Form der beschliffenen Nachbarzähne der Zahnlücke angepaßt.

Die so fertiggestellte Zahnbrücke wird dann dem Patienten eingesetzt. Dazu wird das Provisorium entfernt und danach wird die Zahnbrücke mit ihren Verankerungselementen auf die Nachbarzähne der Zahnlücke aufgesteckt.

Die vorbekannte Vorrichtung hat den Nachteil, daß sie für das Einsetzen und Anfertigen der Zahnbrücke eine Vielzahl von Arbeitsschritten erfordert. Insbesondere müssen nach dem Einbringen der Bohrungen in die zur Verankerung der Zahnbrücke dienenden Nachbarzähne ein Zahnabdruck und ein Modell des Gebisses des Patienten angefertigt werden, und die Zahnbrücke muß in aufwendiger manueller Tätigkeit angefertigt und an das Modell angepaßt werden. Ungünstig ist außerdem, daß die Herstellung und Anpassung der Zahnbrücke an die zuvor mit der Vorrichtung bearbeiteten Nachbarzähne zeitaufwendig ist, so daß der Patient zu wenigstens zwei Sitzungen beim Zahnarzt erscheinen muß, wobei in der ersten Sitzung die für die Verankerung der Zahnbrücke vorgesehenen Zähne beschliffen und der Zahnabdruck angefertigt wird, während in der zweiten Sitzung die Zahnbrücke eingesetzt und an den Nachbarzähnen verankert wird.

Es besteht deshalb die Aufgabe, einen Bausatz mit einer Vorrichtung der eingangs genannten Art zu schaffen, die eine einfache, schnelle und kostengünstige Behandlung des Patienten ermöglicht. Insbesondere soll die Vorrichtung eine schonende Bearbeitung der für die Verankerung der Zahnbrücke vorgesehenen Zähne ermöglichen, wobei möglichst viel Zahnmaterial erhalten bleiben soll.

Diese Aufgabe wird mit den Merkmalen des Patentanspruchs 1 gelöst. Durch die Halterung kann das Bearbeitungswerkzeug mit großer Genauigkeit an den für die Verankerung der Zahnbrücke vorgesehenen Nachbarzähnen der Zahnlücke positioniert werden. Die Halterung ist beidseits der Zahnlücke an den dort befindlichen Zähnen fixiert, so daß sich eine entsprechend stabile Verbindung der Halterung mit den Zähnen ergibt. Da die Führungsstangen nur vergleichsweise wenig Platz beanspruchen, ist die Zahnlücke gut zugänglich, wodurch insbesondere auch die Sicht auf das Schlittenteil und gegebenenfalls das Bearbeitungswerkzeug freigegeben ist, so daß der Zahnarzt beim Einbringen der Aufnahmen in die Nachbarzähne den Materialabtrag beobachten kann. Das in Gebrauchsstellung befindliche Bearbeitungswerkzeug ist durch Verschieben des Schlittenteils auf die der Zahnlücke zugewandten Seitenwandungen der Nachbarzähne zu und von diesen wegbewegbar. Dadurch können auf einfache Weise nutenförmige Aufnahmen in die an die Zahnlücke angrenzenden Nachbarzähne eingebracht werden, in die dazu passende Verankerungsvorsprünge der Zahnbrücke eingesetzt werden können. Das Einbringen der für die Verankerungsvorsprünge vorgesehenen Aufnahmen in die Nachbarzähne kann beispielsweise mittels eines rotierenden Schleif- oder Fräswerkzeuges, mittels eines Lasers und/oder mittels einer Sandstrahleinrichtung erfolgen. Es wird einerseits eine besonders schonende Bearbeitung der Nachbarzähne ermöglicht, wobei nur das für die Verankerung der Zahnbrücke abzutragende Zahnmaterial tatsächlich auch abgetragen wird und die Zahnsubstanz im übrigen erhalten bleibt. Andererseits ergibt sich aber auch eine sehr exakte, vorbestimmte Geometrie der mit der Vorrichtung zu bearbeitenden Stellen der Nachbarzähne, so daß es sogar möglich ist, die Zahnbrücke bereits vor dem Bearbeiten der Nachbarzähne herzustellen und erst danach die für die Verankerung der Zahnbrücke vorgesehenen Aufnahmen mit zu den Verankerungsstellen der Zahnbrücke passenden Abmessungen in die Nachbarzähne der Zahnlücke einzubringen. In vorteilhafter Weise können dadurch ein aufwendiges und teures Anfertigen eines Zahnabdrucks und eines Modells des Gebisses des Patienten entfallen, was einen einfachen und schnellen Einbau der Zahnbrücke ermöglicht. Dabei ist es insbesondere möglich, die Zahnbrücke gleich im Anschluß an das Einbringen der für die Verankerung der Zahnbrücke vorgesehenen Aufnahmen der Nachbarzähne einzusetzen, so daß die gesamte Behandlung in nur einer einzigen Sitzung durchgeführt werden kann. Für den Patient hat dies vor allem den Vorteil, daß der Einbau eines zum Schutz der bearbeiteten Flächen der Nachbarzähne vorgesehenen Provisoriums entfällt und daß bereits nach kurzer Zeit die volle Funktionsfähigkeit und Belastbarkeit seines Gebisses wieder hergestellt ist. Darüber hinaus entfällt auch noch eine aufwendige manuelle Anpassung der Verankerungsstellen der Zahnbrücke an die Nachbarzähne beziehungsweise die darin eingebrachten Aufnahmen, was zusätzlich auch noch eine kostengünstige Herstellung der Zahnbrücke ermöglicht.

Vorteilhaft ist, wenn zur Begrenzung des Positionierweges des Bearbeitungswerkzeuges in Verschieberichtung des Schlittenteiles beidseits des Schlittenteiles Anschläge an der Halterung vorgesehen sind. Die beidseits der Zahnlücke vorgesehen Aufnahmen für die Verankerungsvorsprünge der Zahnbrücke können dann in einem definierten Abstand ihrer Bodenflächen in die Seitenflächen der an die Zahnlücke angrenzenden Nachbarzähne eingebracht werden.

Vorteilhaft ist, wenn die Halterung wenigstens ein U-förmiges Halteteil aufweist, das in Gebrauchsstellung wenigstens einen Zahn des Patienten gabelförmig übergreift, insbesondere einen benachbart an die Zahnlücke angrenzenden Zahn. Das Halteteil ist dann besonders gut an den Nachbarzähnen der Zahnlücke befestigbar. Dabei können die Schenkel des U-förmigen Halteteils gegebenenfalls als Klemmschenkel ausgebildet sein, zwischen denen der zum Befestigen des Halteteils vorgesehene Zahn festklemmbar ist.

Bei einer besonders vorteilhaften Ausführungsform der Erfindung ist zum Auskleiden der Innenhöhlung des etwa U-förmigen Halteteils eine aushärtende und/oder sich verfestigende Vergußmasse vorgesehen. Diese ist in Vormontagestellung des Halteteiles vorzugsweise breiig oder teigig, so daß das Halteteil nach Auskleidung seiner Innenhöhlung mit der Vergußmasse auf einfache Weise auf einen Zahn des Patienten aufgesteckt werden kann. In Gebrauchsstellung verfestigt sich die in dem Zwischenraum zwischen dem Zahn und der Halterung befindliche Vergußmasse oder härtet aus, so daß das Halteteil dann fest mit dem Zahn verbunden ist. Vorzugsweise weist die Vergußmasse im verfestigten Zustand noch eine gewisse Elastizität auf, so daß das Halteteil zusammen mit der Vergußmasse nach dem Bearbeiten der Nachbarzähne der Zahnlücke vom Gebiß des Patienten abgezogen werden kann. Die Vergußmasse ist vorzugsweise eine Silikonmasse. Es kann aber auch eine Zahnabdruckmasse verwendet werden. Die Halterung kann gegebenenfalls an ihrer in Gebrauchsstellung der Vergußmasse zugewandten Innenseite eine Perforation oder eine Struktur aufweisen, die ein besseres Anhaften der Vergußmasse an der Halterung ermöglicht, so daß diese nach dem Aushärten der Vergußmasse zusammen mit der Vergußmasse von dem Zahn abgezogen werden kann. Zweckmäßigerweise wird die Vergußmasse erst kurz vor dem Aufstecken der Halterung auf das Gebiß des Patienten in die Halterung eingebracht.

Vorteilhaft ist, wenn das Bearbeitungswerkzeug an dem Werkzeugkopf einer zahnärztlichen Bearbeitungseinrichtung angeordnet ist, und wenn dieser Werkzeugkopf lösbar mit dem Schlittenteil der Schiebeführung verbindbar ist. Dadurch ist es möglich, das an der Halterung geführte Schlittenteil auf einfache Weise an eine in einer Zahnarztpraxis bereits vorhandene zahnärztliche Bearbeitungseinrichtung zu adaptieren, so daß die vorhandenen Einrichtungen weiterbenutzt und einer zusätzlichen Funktion zugeführt werden können.

Zweckmäßigerweise weist das Schlittenteil eine an die Form des Werkzeugkopfs der zahnärztlichen Bearbeitungseinrichtung angepaßte Aufnahme auf, in die der Werkzeugkopf formschlüssig einsetzbar ist, wobei die Aufnahme mit dem Werkzeugkopf vorzugsweise eine Preßpassung bildet. Der Werkzeugkopf kann dann zum Verbinden mit dem Schlittenteil auf einfache Weise auf das Schlittenteil aufgesteckt und nach Beendigung des Bearbeitungsvorgangs wieder von diesem abgezogen werden.

Vorteilhaft ist, wenn der Werkzeugkopf als Winkelkopf mit einem um eine Rotationsachse drehangetriebenen Bearbeitungswerkzeug ausgebildet ist und wenn der Werkzeugkopf mittels eines Schwenkgelenks relativ zu der Halterung um die Rotationsachse des Bearbeitungswerkzeugs verschwenkbar mit der Halterung verbunden ist. Der Werkzeugkopf kann dadurch noch besser in der Mundhöhle des Patienten positioniert werden. Zweckmäßigerweise ist das Schwenkgelenk an dem Schlittenteil der Schiebeführung angeordnet.

Bei einer bevorzugten Ausführungsform der Erfindung ist vorgesehen, daß die Schiebeführung seitlich beidseits des Schlittenteils jeweils wenigstens eine an der Halterung fixierte Führungsleiste zum Führen des Schlittenteils aufweist, und daß die Führungsleisten zum verschiebbaren und drehbaren Führen des Schlittenteiles in eine gemeinsame, am Außenumfang des Schlittenteiles angeordnete Ringnut oder in mehrere, an einander abgewandten Außenumfangsbereichen des Schlittenteiles diametral gegenüberliegend angeordnete Ringnutabschnitte eingreifen. Dadurch ergibt sich eine besonders kompakte Anordnung, die in Gebrauchsstellung eine gute Sicht auf die Zahnlücke und die zu bearbeitenden Bereiche der daran angrenzenden Zähne ermöglicht. Dabei ist der das Bearbeitungswerkzeug tragende Werkzeugkopf verschiebbar und verschwenkbar an der Halterung geführt. Die am Außenumfang des Schlittenteiles angeordneten Ringnutenabschnitte erstrecken sich vorzugsweise entlang einer gemeinsamen Kreislinie.

Besonders vorteilhaft ist, wenn die Halterung mindestens zwei in Erstreckungsrichtung der Halterung versetzt zueinander angeordnete Auflagestellen für die Kauflächen wenigstens eines mit der Halterung zu verbindenden Zahnes aufweist und wenn mindestens eine dieser Auflagestellen an einem Abstandshalter angeordnet ist, der quer zur Ebene der Kaufläche relativ zu der Positionierenrichtung verstellbar ist. Der Abstand der Positioniereinrichtung zu den Zähnen ist dann mittels des Abstandshalters einstellbar, beispielsweise um die Halterung an unterschiedlich hohe Zähne anpassen zu können. Zweckmäßigerweise ist als Abstandhalter eine Justierschraube vorgesehen, die eine stufenlose Höhen- beziehungsweise Neigungseinstellung der Positioniereinrichtung relativ zu der Ebene der Kaufläche der Zähne ermöglicht.

Der erfindungsgemäße Bausatz enthält wenigstens eine vorkonfektionierte Zahnbrücke mit einem Brückenteil, wobei die Zahnbrücke in Erstreckungsrichtung beidseits des Brückenteils jeweils wenigstens einen Verankerungsvorsprung mit vorgegebenen Abmessungen aufweist. Dabei ist die in dem Bausatz enthaltene, zum Bearbeiten der Nachbarzähne der Zahnlücke vorgesehene Vorrichtung zum Einbringen von Aufnahmevertiefungen in die der Zahnlücke zugewandten Seitenflächen der Nachbarzähne ausgebildet, wobei die Abmessungen der Aufnahmevertiefungen denjenigen der Verankerungsvorsprünge der Zahnbrücke entsprechen. Dies kann insbesondere dadurch erreicht werden, daß die Vorrichtung als Bearbeitungswerkzeug ein rotierendes Schleif- oder Fräswerkzeug aufweist, das parallel zu seiner Rotationsachse auf die zu bearbeitenden Seitenflächen der Nachbarzähne zubewegbar ist und dessen Durchmesser der Breite der Verankerungsvorsprünge entspricht oder etwas größer ist als diese. Die Abmessungen der Aufnahmevertiefungen passen dann zu denjenigen der Verankerungsvorsprünge, so daß diese gleich nach dem Einbringen der Aufnahmevertiefungen in die Nachbarzähne eingesetzt werden können. Dadurch ergibt sich einerseits ein schneller und kostengünstiger Einbau der Zahnbrücke in der Mundhöhle und andererseits kann die vorgefertige Zahnbrücke als Serienteil mit fest vorgegebenen Abmessungen und somit entsprechend kostengünstig hergestellt werden. Das Brückenteil kann zumindest einen künstlichen Zahn aufweisen.

Vorteilhaft ist, wenn die beidseits des Brückenteils befindlichen Verankerungsvorsprünge wenigstens eine gleiche Abmessung aufweisen. Die zum Befestigen der Verankerungsvorsprünge in die Nachbarzähne einzubringenden Aufnahmevertiefungen können dann ebenfalls die gleiche Abmessung oder diegleichen Abmessungen aufweisen, was eine einfache Herstellung der Aufnahmevertiefungen und eine entsprechend einfach aufgebaute Bearbeitungsvorrichtung ermöglicht. Vorzugsweise weisen die beidseits des Brückenteiles befindlichen Verankerungsvorsprünge in der Ebene der Kauflächen oder einer parallel dazu angeordneten Ebene quer zur Erstreckungsrichtung der Zahnbrücke zumindest die gleiche Breite auf. Die in Erstreckungsrichtung der Zahnbrücke orientierte Länge der Verankerungsvorsprünge kann bei den beidseits des Brückenteils angeordneten Verankerungsvorsprüngen unterschiedlich sein, beispielsweise wenn einer der Verankerungsvorsprünge an einem Premolar und der andere an einem Molar befestigt werden soll.

Zweckmäßigerweise liegt die dem Brückenteil abgewandte seitliche Abschlußfläche des Verankerungsvorsprungs auf einer Zylinderfläche oder einer Kegelmantelfläche eines Kegelstumpfs, der sich ausgehend von der Kaufläche des Kunstzahnes zum Zahnhals hin verjüngt. Die zum Einsetzen der Verankerungsvorsprünge vorgesehenen Aufnahmevertiefungen in den Nachbarzähnen können dann auf einfache Weise mit den in einer Zahnarztpraxis üblicherweise vorhandenen zylindrischen oder kegelförmigen Verarbeitungswerkzeugen hergestellt werden.

Bei einer vorteilhaften Ausführungsform der Erfindung ist wenigstens ein Verankerungsvorsprung durch das freie Ende eines in eine Lochung der Zahnbrücke eingesetzten Haltestifts gebildet und/oder einstückig mit dem Brückenteil verbunden. Dabei kann der Haltestift gegebenenfalls eine Durchgangslochung der Zahnbrücke durchsetzen, wobei die beidseits aus dem Brückenteil herausragenden freien Enden des Haltestifts die Verankerungsvorsprünge bilden. Die Verankerungsvorsprünge können aber auch einstückig mit dem Brückenteil ausgebildet sein, beispielsweise als Vollkeramikteil. Die Zahnbrücke weist dann eine hohe Biege- und Bruchfestigkeit auf.

Besonders vorteilhaft ist, wenn der Bausatz mehrere vorkonfektionierte Zahnbrücken mit Kunstzähnen unterschiedlicher Farben, Materialien und/oder Abmessungen aufweist. Der Zahnarzt kann dann nach dem Einbringen der zum Verankern der Zahnbrücke vorgesehenen Aufnahmen in die Nachbarzähne eine zu den individuellen Abmessungen der Zahnlücke und/oder der Nachbarzähne passende Zahnbrücke aus dem Bausatz auswählen und dem Patienten einsetzen. Bei Zahnbrücken, deren Farbe der Farbe der natürlichen Zähne nachgebildet ist, wie zum Beispiel bei mit Keramik oder Kunststoff verblendeten Zahnbrücken mit einer aus Gold bestehenden Tragekonstruktion, kann der Bausatz sogar Zahnbrücken mit unterschiedlichen Farben aufweisen, so daß der Zahnarzt eine Zahnbrücke auswählen kann, deren Farbe genau zu der Farbe der Zähne des Patienten paßt.

Besonders vorteilhaft ist, wenn der Bausatz Zahnbrücken aus unterschiedlichen Materialien aufweist, beispielsweise Zahnbrücken, deren Kunstzähne vollständig aus einem Edelmetall, wie zum Beispiel Gold bestehen und/oder Zahnbrücken, bei denen die Kunstzähne mit Kunststoff oder Keramik verblendet sind. Dadurch ist es möglich, nach dem Einbringen der zur Verankerung der Zahnbrücke vorgesehenen Aufnahmen in die Nachbarzähne dem Patienten vorübergehend Zahnbrücken aus unterschiedlichen Materialien zur Anprobe einzusetzen, so daß dieser die optische Wirkung der unterschiedlichen Zahnbrücken prüfen kann. Der Patient kann dann entscheiden, ob er beispielsweise eine kostengünstige Zahnbrücke aus Gold oder lieber eine optisch ansprechendere, aber auch teurere Zahnbrücke mit keramisch beschichteten Kunstzähnen einbauen lassen will, deren Farbe der Farbe derjenigen der natürlichen Zähne entspricht.

Nachfolgend sind Ausführungsbeispiele der Erfindung anhand der Zeichnung näher erläutert. Es zeigen zum Teil stärker schematisiert:
- Fig.1: eine Ansicht einer Vorrichtung zum Bearbeiten der Nachbarzähne einer Zahnlücke für das Einsetzen einer Zahnbrücke, wobei der das Bearbeitungswerkzeug haltende Werkzeugkopf von der Positioniervorrichtung abgezogen ist,
- Fig.2: eine Darstellung ähnlich Fig.1, wobei jedoch der Werkzeugkopf auf das Schlittenteil der Positioniervorrichtung aufgesteckt ist,
- Fig.3: eine Seitenansicht eines etwa U-förmigen Halteteils zum Befestigen der Positioniereinrichtung am Gebiß des Patienten,
- Fig.4: eine Seitenansicht des Halteteils aus der in Fig.3 mit IV bezeichneten Richtung,
- Fig.5: eine Seitenansicht der in Fig.2 gezeigten, am Gebiß des Patienten befestigten Vorrichtung gemäß Fig.1,
- Fig.6: eine Aufsicht auf die Nachbarzähne der mit der Zahnbrücke zu schließenden Zahnblücke nach dem Einbringen der Aufnahmevertiefungen für die Verankerungsvorsprünge der Zahnbrücke,
- Fig.7: eine Seitenansicht der Zahnbrücke, wobei die Verankerungsvorsprünge besonders gut erkennbar sind,
- Fig.8: eine Seitenansicht der in die Zahnlücke eingesetzten Zahnbrücke, wobei die durch die Nachbarzähne verdeckten Verankerungsvorsprünge strichliniert markiert sind, und
- Fig.9: eine Aufsicht auf die in die Zahnlücke eingesetzte Zahnbrücke, wobei auch die Nachbarzähne erkennbar sind.

Eine im ganzen mit 1 bezeichnete Vorrichtung zum Bearbeiten der Nachbarzähne 2 einer Zahnlücke 3 für das Einsetzen einer einen fehlenden Zahn ersetzenden Zahnbrücke 4 weist als Bearbeitungswerkzeug 5 zum Abtragen von Zahnmaterial ein drehangetriebenes Schleifwerkzeug auf. Die Vorrichtung hat eine am Gebiß des Patienten befestigbare Halterung 6, an der eine verstellbare Positioniereinrichtung 7 zum geführten Positionieren des Bearbeitungswerkzeugs 5 angeordnet ist. Mittels der Positioniereinrichtung 7 ist das Bearbeitungswerkzeug 5 zum Einbringen von Aufnahmevertiefungen 8 in die der Zahnlücke 4 zugewandten Seitenwandungen der Nachbarzähne 2 auf die Nachbarzähne 2 zu- und von diesen wegbewegbar.

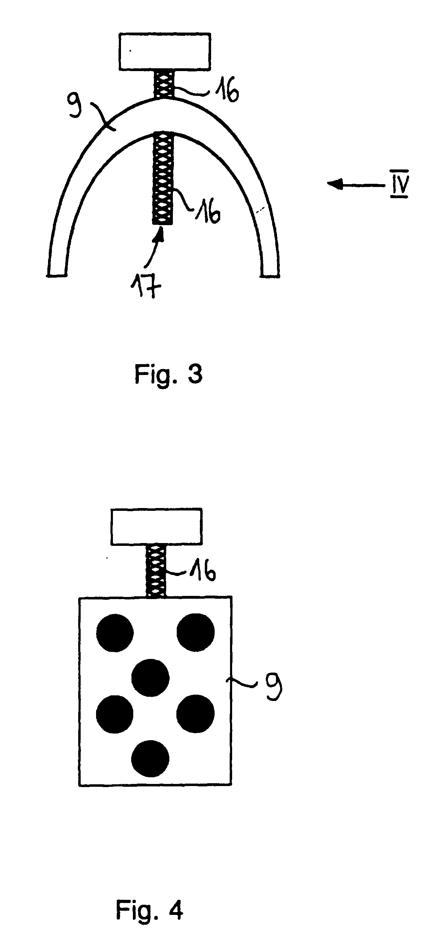

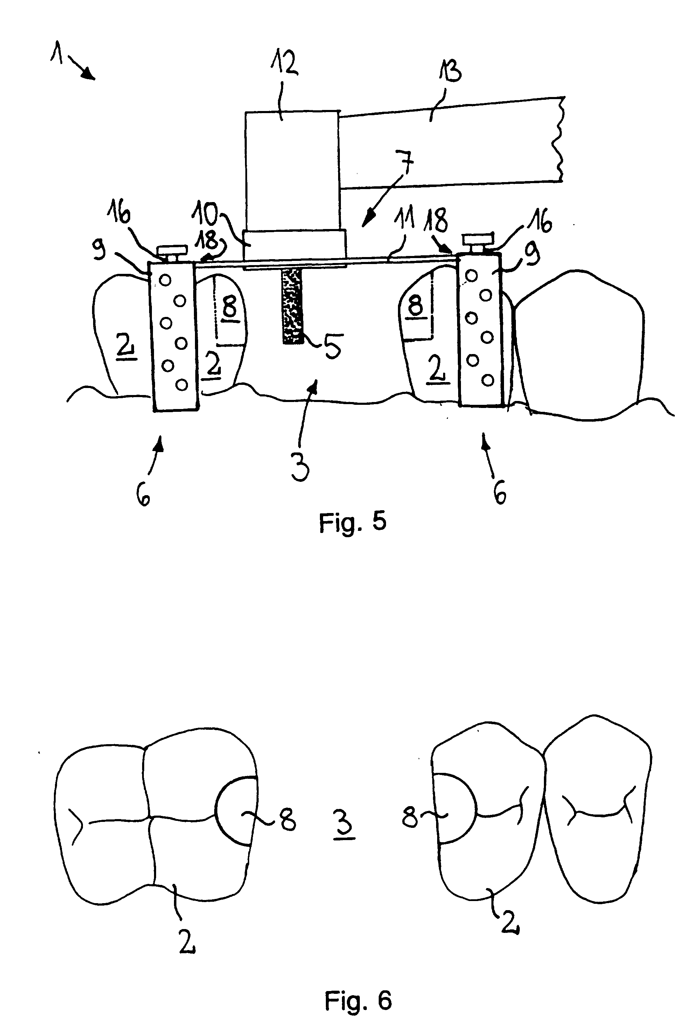

In Fig.3 und 4 ist erkennbar, daß die Halterung 6 zwei etwa U-förmige Halteteile 9 aufweist, welche in Gebrauchsstellung jeweils einen der beiden benachbart an die Zahnlücke 4 angrenzende Nachbarzähne 2 gabelförmig übergreifen (Fig.5). Dabei ist einer der beiden U-Schenkel des Halteteils 9 an der inneren und der andere an der äußeren Seitenfläche des ihm zugeordneten Nachbarzahns 2 angeordnet. Die Übergangsbereiche zwischen dem U-Quersteg und den U-Schenkeln des Halteteiles 9 sind gerundet. Die lichte Weite zwischen den U-Schenkeln des Halteteiles 9 nimmt ausgehend von den freien Enden der U-Schenkel zum U-Quersteg hin vorzugsweise kontinuierlich ab.

Das Befestigen der Halteteile 9 an den Nachbarzähnen 2 erfolgt mittels einer sich verfestigenden Vergußmasse. Vor dem Aufstecken der Halteteile 9 auf die Nachbarzähne 2 wird diese Vergußmasse in teigigem, breiigem oder zähflüssigem Zustand innenseitig auf die Halteteile 9 aufgetragen. Danach werden die mit der Vergußmasse ausgekleideten Halteteile 9 auf die Nachbarzähne 2 aufgesteckt, wobei die Vergußmasse mit den Nachbarzähnen 2 in Berührung gerät und die Zwischenräume zwischen den Halteteilen 9 und den Nachbarzähnen 2 ausfüllt. Die Vergußmasse verfestigt sich dann im Mundraum des Patienten, so daß die Halterung dann fest mit den Nachbarzähnen 2 verbunden ist. Dabei weist die Vergußmasse noch eine gewisse Elastizität auf, so daß die Halterung 6 nach dem Bearbeiten der Nachbarzähne auf einfache Weise vom Gebiß des Patienten abgezogen werden kann. Damit die Vergußmasse beim Abziehen Halterung 6 besser an den Halteteilen 9 anhaften bleibt, weisen die Halteteile 9 Lochungen auf, in welche die Vergußmasse beim Einbringen in die Halteteile 9 eindringt (Fig.4).

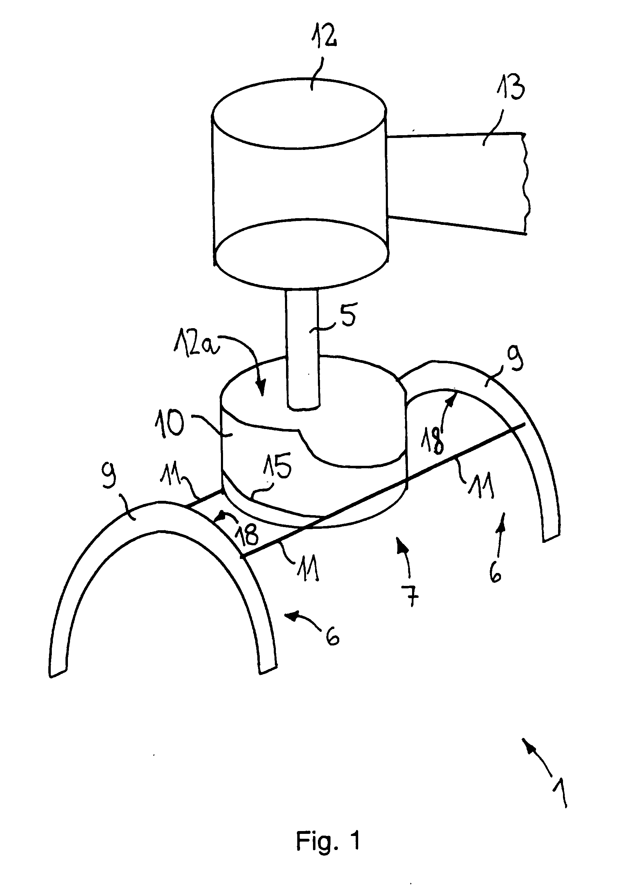

Wie in Fig.1 besonders gut erkennbar ist, weist die Positioniereinrichtung 7 eine Schiebeführung mit einem relativ zu der Halterung 6 verschiebbaren Schlittenteil 10 auf. Das Schlittenteil 10 ist an parallel zueinander verlaufenden Führungsleisten 11 gelagert, die an ihren Enden jeweils mit einem der beiden in Gebrauchsstellung beidseits der Zahnlücke 4 angeordneten Halteteilen 9 verbunden sind. Die Führungsleisten 11 sind in Gebrauchsstellung in einer Ebene angeordnet, die etwa parallel zu der Ebene der Kauflächen der Nachbarzähne 2 verläuft oder mit dieser identisch ist (Fig.5). Das Schlittenteil 10 ist zwischen den Halteteilen 9 angeordnet und zum Einbringen der Aufnahmevertiefungen 8 in die Nachbarzähne 2 parallel zu den Führungsleisten 11 auf die Halteteile 9 zu- und von diesen wegbewegbar. In Fig.5 ist erkennbar, daß die Halteteile 9 außerhalb der in die Nachbarzähne 2 einzubringenden Vertiefungen 8 angeordnet sind, so daß das Bearbeitungswerkzeug 5 zum Abtragen des Zahnmaterials in die Aufnahmevertiefungen 8 verschoben werden kann.

Das Bearbeitungswerkzeug 5 ist an einem an sich bekannten Werkzeugkopf 12 einer zahnärztlichen Bearbeitungseinrichtung angeordnet. Die Bearbeitungseinrichtung weist ein in der Zeichnung nur teilweise dargestelltes Griffteil 13 auf, in dem ein mit dem Bearbeitungswerkzeug 5 in Antriebsverbindung stehender elektrischer Antriebsmotor angeordnet ist. An seinem dem Werkzeugkopf 12 abgewandten Ende ist das Griffteil 13 mit einer Stromversorungsleitung und gegebenenfalls einer Wasservorsorgungsleitung zum Zuführen von Kühlwasser zu dem Bearbeitungswerkzeug 5 verbunden. Der Werkzeugkopf 12 ist als Winkelkopf ausgebildet und mit seinem Endbereich gegenüber dem Griffteil 13 um etwa 90° abgewinkelt.

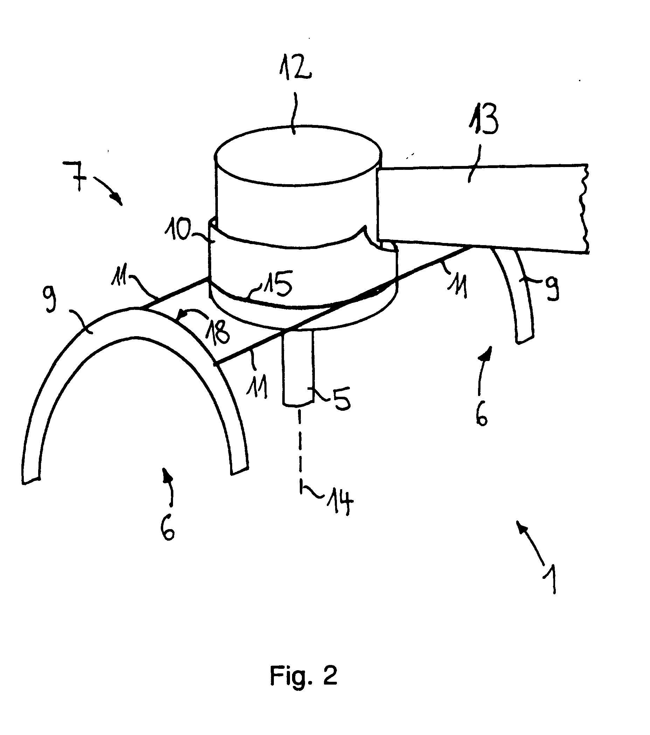

In Fig.1 und 2 ist erkennbar, daß der Werkzeugkopf 12 lösbar mit dem Schlittenteil 10 der Schiebeführung verbindbar ist. Das Schlittenteil 10 weist dazu eine an die Außenkontur des Werkzeugkopfs 12 angepaßte, als Vertiefung ausgebildete Aufnahme 12a auf, in die der Werkzeugkopf 12 mit seinem dem Bearbeitungswerkzeug 5 zugewandten Endbereich formschlüssig einsetzbar ist. Dabei bilden die Aufnahme 12a und der darin eingesetzte Werkzeugkopf 12 eine Preßpassung, mittels welcher der Werkzeugkopf 12 in der Aufnahme 12a festklemmbar ist. Insgesamt bilden also der Werkzeugkopf 12 und das Schlittenteil 10 beziehungsweise die Aufnahme 12a eine Steckkupplung, deren Kupplungsteile lösbar miteinander verbindbar sind. Dadurch können die in Zahnarztpraxen bereits vorhandenen, relativ teuren Werkzeugköpfe 12 mit der Positioniereinrichtung 7 kombiniert und somit weiterbenutzt werden. Selbstverständlich kann die Vorrichtung 1 aber auch einen eigenen, von vorhandenen Einrichtungen unabhängigen Antrieb für das Bearbeitungswerkzeug 5 aufweisen, der vorzugsweise ein direkt an dem Schlittenteil 10 angeordneter Mikroantrieb ist.

Das an den Werkzeugkopf 12 angeordnete Bearbeitungswerkzeug 5 ist um eine quer zur Erstreckungsrichtung des Griffteils 13 verlaufende Rotationsachse 14 drehangetrieben. Diese ist in Fig.2 strichliniert markiert. Der in die Aufnahme 12a des Schlittenteils 10 eingesetzte Werkzeugkopf 12 ist relativ zu den Halteteilen um die Rotationsachse 14 des Bearbeitungswerkzeugs 5 verschwenkbar mit den Halteteilen 9 verbunden. Die seitlich beidseits des Schlittenteils 10 angeordneten Führungsleisten 11 greifen dazu in eine gemeinsame, am Außenumfang des Schlittenteils 10 angeordnete Ringnut 15 ein, derart, daß das Schlittenteil 10 und der darin gehaltene Werkzeugkopf12 einerseits entlang der Führungsleisten 11 verschiebbar und andererseits aber auch um die Rotationsachse relativ zu den Führungsleisten 11 verschwenkbar ist. Das Griffteil 13 kann dadurch in der Mundhöhle des Patienten in eine jeweils günstige Lage verschwenkt werden. Dabei kann die Schwenklage des Griffteils 13 gegebenenfalls sogar während des Verschiebens des an dem Schlittenteil 10 geführten Werkzeugkopfs 12 verändert werden, um eine gute Zugänglichkeit zu der jeweiligen Bearbeitungsstelle zu erreichen.

In Fig.5 ist erkennbar, daß an jedem der U-förmigen Halteteile 9 jeweils ein Abstandshalter 16 mit einer quer zur Ebene der Kaufläche der Nachbarzähne 2 verstellbaren Auflagestelle 17 für die Nachbarzähne 2 angeordnet ist. Die Auflagestelle 17 ist jeweils an dem freien Ende einer Justierschraube angeordnet, die den U-Querschenkel des Halteteils 9 etwa in Erstreckungsrichtung dessen U-Schenkel durchsetzt. Die Justierschrauben weisen jeweils an ihrem der Auflagestelle 17 abgewandten Ende einen Schraubenkopf, der eine Angriffsstelle für ein Drehwerkzeug aufweisen oder von Hand verstellbar sein kann, insbesondere mittels einer am Außenumfang des Schraubenkopfs vorgesehenen Rändelung. Mittels der Justierschrauben kann die Höhe und/oder Neigung der durch die Führungsleisten 11 aufgespannten Ebene relativ zu der Ebene der Kauflächen der Zähne justiert werden. Dadurch ist es insbesondere möglich, die Halterung 6 an unterschiedlich hohe Zähne anzupassen, beispielsweise wenn eine der beiden Halterungen 6 an einem Molar und die andere an einem Eckzahn befestigt werden soll.

Damit das Bearbeitungswerkzeug 5 mittels der Positioniereinrichtung 7 um eine genau definierte Wegstrecke verschiebbar ist, sind beidseits des Schlittenteils 10 Anschläge 18 an den Halterungen 9 vorgesehen, gegen die das Schlittenteil 10 positionierbar ist. Dabei ist diese Wegstrecke so an die Länge der Zahnbrücke 4 angepaßt, der der lichte Abstand zwischen den einander zugewandten Seitenflächen der Aufnahmevertiefungen 8 der beiden beidseits der Zahnlücke 3 angeordneten Nachbarzähne 2 der Zahnbrücke 4 einschließlich der Verankerungsvorsprünge 19 entspricht. Somit ist unabhängig von den jeweiligen geometrischen Abmessungen der Zahnlücke 3 und der Nachbarzähne 2 jeweils sichergestellt, daß die Zahnbrücke 4 genau in den zwischen den Aufnahmevertiefungen 8 gebildeten Zwischenraum einsetzbar ist.

Nachfolgend sind die zum Einbau der Zahnbrücke 4 erforderlichen Arbeitsschritte kurz erläutert. Zunächst werden die Halteteile 9 der Vorrichtung 1 an den Nachbarzähnen 2 der Zahnlücke 3 befestigt. Anschließend wird der Werkzeugkopf 12 mit dem Bearbeitungswerkzeug 5 in die Aufnahme 12a des Schlittenteils 10 eingesetzt und formschlüssig mit dieser verbunden. Dann wird das Bearbeitungswerkzeug um die Achse 14 rotiert und zum Einbringen der Aufnahmevertiefungen 8 jeweils auf die Nachbarzähne 2 zubewegt, bis das Schlittenteil 10 an dem Anschlag 18 anliegt. Wenn beide Aufnahmen 8 fertiggestellt sind, wird die Vorrichtung 1 vom Gebiß des Patienten abgenommen. Dann wird die vorgefertigte Zahnbrücke 4 in die Zahnlücke 3 eingesetzt, wobei die Verankerungsvorsprünge 19 in die Aufnahmevertiefungen 8 eingreifen. Dabei wird in den eventuell zwischen den Verankerungsvorsprüngen 19 und den Aufnahmevertiefungen 8 verbleibenden Spalt ein Zement, Klebstoff oder dergleichen Befestigungs- und/oder Dichtmittel eingebracht. Nachdem das Dichtmittel ausgehärtet ist oder sich verfestigt hat, können die noch sichtbaren Oberflächen der Verankerungsvorsprünge und/oder die daran angrenzenden Bereiche der Nachbarzähne 2 gegebenenfalls beschliffen werden, um die Form der Verankerungsvorsprünge 19 an die der Nachbarzähne 2 anzupassen und insbesondere einen stufenlosen, glatten Übergang zwischen den Nachbarzähnen 2 und den Verankerungsvorsprünge 19 zu erreichen. Gegebenenfalls kann auch die Kaufläche des Brückenteils 20 beschliffen werden, um die Okklusion zu verbessern.

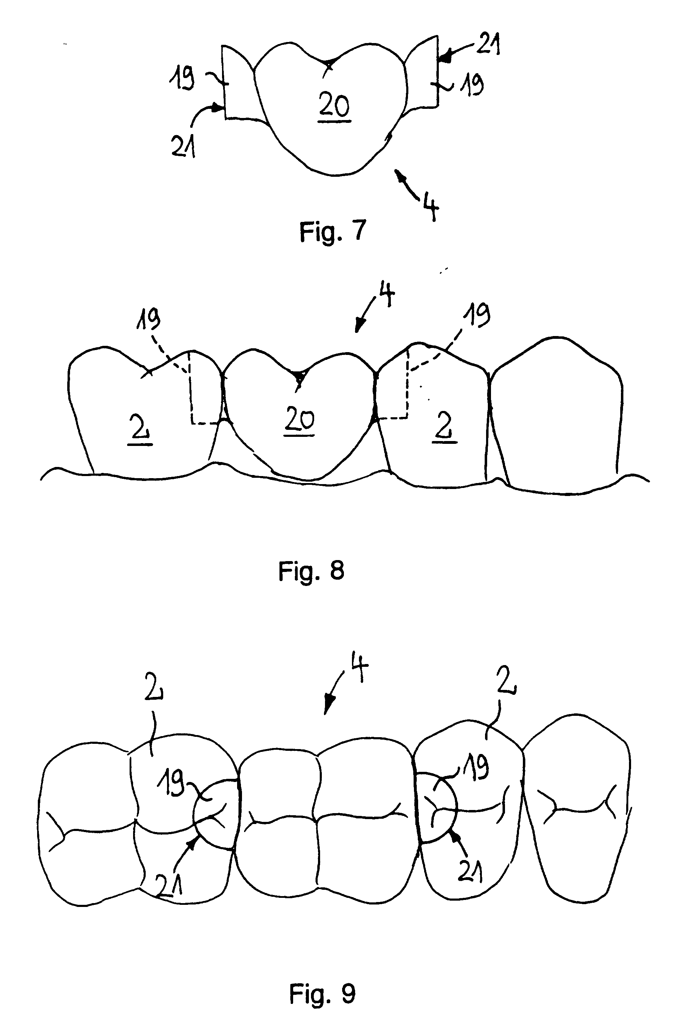

Die Vorrichtung 1 zum Bearbeiten der Nachbarzähne 2 der Zahnlücke 3 ist Teil eines Bausatzes zum Erstellen einer Zahnbrücke. Der Bausatz weist mehrere vorkonfektionierte Zahnbrücken 4 auf, die jeweils ein Brückenteil 20 mit mindestens einem künstlichen Zahn aufweisen, der den(die) fehlenden Zahn(Zähne) der Zahnlücke 3 ersetzt. Wie in Fig.7 erkennbar ist, ist in Erstreckungsrichtung beidseits des Brücketeils 20 jeweils ein Verankerungsvorsprung 19 mit vorgegebenen Abmessungen vorgesehen. In Fig.8 und 9 ist erkennbar, daß die Abmessungen der Verankerungsvorsprünge 19 zu denen der Aufnahmevertiefungen 8 passen, so daß die in die Zahnlücke 3 eingesetzte Zahnbrücke 4 mit ihren Verankerungsvorsprüngen 19 unmittelbar an die Nachbarzähne 2 anschließt oder nur durch einen kleinen Spalt von diesem beabstandet ist. In den Spalt kann je nach Material und Art der Zahnbrücke 4 beim Einsetzen der Zahnbrücke 4 auf an sich bekannte Weise ein Zement oder ein Klebstoff eingebracht werden. Die Zahnbrücke 4 ist dann nach dem Verfestigen des Klebstoffs beziehungsweise des Zements fest mit den Nachbarzähnen 2 verbunden. In Fig.7 und 9 ist erkennbar, daß die beidseits des Brückenteils 20 angeordneten Verankerungsvorsprünge 19 die gleichen, durch die Abmessungen des Bearbeitungswerkzeugs 5 vorgegebenen Abmessungen aufweisen.

Das Bearbeitungswerkzeug 5 weist die Form eines Kegelstumpfs auf, der sich ausgehend von dem Werkzeugkopf 12 zum freien Ende des Bearbeitungswerkzeugs 5 verjüngt. Die dem Brückenteil 20 abgewandten seitlichen Abschlußflächen 21 der Verankerungsvorsprünge 19 sind jeweils auf der Mantelfläche eines der Form des Bearbeitungswerkzeugs 5 entsprechenden Kegelstumpfs angeordnet, der sich ausgehend von der Kaufläche des Brückenteils 20 zu der dieser abgewandten Rückseite des Brücketeils 20 verjüngt. Der Winkel, den die Kegelmantelfläche auf einer Durchmesserebene des Kegels mit einer parallel zur Achse des Kegels angeordneten Geraden einschließt, beträgt vorzugsweise zwischen 0 und 6°. Durch die an den Verankerungsvorsprüngen 19 vorgesehenen Kegelmantelflächen und die diesen in Gebrauchsstellung zugewandten und dazu passenden Flächen der Aufnahmevertiefungen 8 wird eine bessere Haftung der Verankerungsvorsprünge 19 an den Nachbarzähnen 2 erreicht.

Erwähnt werden soll noch, daß die seitlichen Abschlußflächen 21 der Verankerungsvorsprünge 19 der Zahnbrücke 4 eine Oberflächenrauhigkeit aufweisen und insbesondere sandgestrahlt sein können, damit eine darauf aufgebrachte Silanisierungsschicht besser haftet. Diese wird zweckmäßigerweise vom Zahnarzt kurz vor dem Einsetzen der Zahnbrücke 4 auf die seitlichen Abschlußflächen 21 der Verankerungsvorsprünge 19 aufgetragen.

Die Vorrichtung 1 zum Bearbeiten der Nachbarzähne 2 einer Zahnlücke 3 für das Einsetzen einer wenigstens einen fehlenden Zahn ersetzenden Zahnbrücke 4 weist ein Bearbeitungswerkzeug 5 zum Abtragen von Zahnmaterial, insbesondere ein Schleifwerkzeug, auf. Die Vorrichtung 1 hat eine Halterung 6 zum Befestigen am Gebiß des Patienten, die eine verstellbare Positioniereinrichtung 7 zum geführten Positionieren des Bearbeitungswerkzeugs 5 trägt. Das Bearbeitungswerkzeug 5 ist zum Einbringen von Aufnahmevertiefungen 8 in die der Zahnlücke 3 zugewandten Seiten der Nachbarzähne 2 mittels der Positioniereinrichtung 7 auf die Nachbarzähne 2 zu- und von diesen wegbewegbar.

## Patentansprüche

1. Bausatz zum Erstellen einer Zahnbrücke **gekennzeichnet durch** eine Vorrichtung (1) zum Bearbeiten der Nachbarzähne (2) einer Zahnlücke (3) für das Einsetzen einer wenigstens einen fehlenden Zahn ersetzenden Zahnbrücke (4), mit einem Bearbeitungswerkzeug (5) zum Abtragen von Zahnmaterial, insbesondere einem Schleifwerkzeug, und mit einer am Gebiß des Patienten befestigbaren Halterung, an der eine verstellbare Positioniereinrichtung (7) zum geführten Positionieren des Bearbeitungswerkzeugs (5) angeordnet ist, die eine Schiebeführung mit einem relativ zu der Halterung (6) an Führungsleisten (11) oder Führstangen verschiebbar gelagerten Schlittenteil (10) aufweist, welches das Bearbeitungswerkzeug (5) führt, wobei die Halterung (6) zum Befestigen an beidseits der Zahnlücke (3) angeordneten Zähnen wenigstens zwei, beidseits des Bearbeitungswerkzeugs (5) angeordnete, jeweils mit wenigstens einem Zahn verbindbare Haltebereiche aufweist, und daß diese Haltebereiche **durch** die Führungsleisten (11) oder Führstangen derart miteinander verbunden sind, dass das Bearbeitungswerkzeug (5) zum Einbringen von Aufnahmevertiefungen (8) in die der Zahnlücke (3) zugewandten Seiten der Nachbarzähne (2) auf die Nachbarzähne (2) zu- und von diesen wegbewegbar ist, und **durch** wenigstens eine vorkonfektionierte Zahnbrücke (4) mit einem Brückenteil (20), wobei diese Zahnbrücke (4) in Erstreckungsrichtung beidseits des Brückenteils (20) jeweils wenigstens einen Verankerungsvorsprung (19) mit vorgegebenen Abmessungen aufweist und dass die Abmessungen der Aufnahmevertiefungen denjenigen der Verankerungsvorsprünge der Zahnbrücke entsprechen.

2. Bausatz nach Anspruch 1, **dadurch gekennzeichnet, daß** zur Begrenzung des Positionierweges des Bearbeitungswerkzeuges (5) in Verschieberichtung des Schlittenteiles (10) beidseits des Schlittenteiles (10) Anschläge (18) an der Halterung (6) vorgesehen sind.

3. Bausatz nach Anspruch 1 oder 2, **dadurch gekennzeichnet, daß** die Halterung (6) wenigstens ein etwa U-förmiges Halteteil (9) aufweist, das in Gebrauchsstellung wenigstens einen Zahn des Patienten gabelförmig übergreift, insbesondere einen benachbart an die Zahnlücke (3) angrenzenden Zahn.

4. Bausatz nach einem der Ansprüche 1 bis 3, **dadurch gekennzeichnet, daß** zum Auskleiden der Innenhöhlung des etwa U-förmigen Halteteils (9) eine aushärtende und/oder sich verfestigende Vergußmasse vorgesehen ist.

5. Bausatz nach einem der Ansprüche 1 bis 4, **dadurch gekennzeichnet, daß** das Bearbeitungswerkzeug (5) an dem Werkzeugkopf (12) einer zahnärztlichen Bearbeitungseinrichtung angeordnet ist, und daß dieser Werkzeugkopf (12) lösbar mit dem Schlittenteil (10) der Schiebeführung verbindbar ist.

6. Bausatz nach einem der Ansprüche 1 bis 5, **dadurch gekennzeichnet, daß** das Schlittenteil (10) eine an die Form des Werkzeugkopfs (12) der zahnärztlichen Bearbeitungseinrichtung angepaßte Aufnahme (12a) aufweist, in die der Werkzeugkopf (12) formschlüssig einsetzbar ist, und daß die Aufnahme (12a) mit dem Werkzeugkopf vorzugsweise eine Preßpassung bildet.

7. Bausatz nach einem der Ansprüche 1 bis 6, **dadurch gekennzeichnet, daß** der Werkzeugkopf (12) als Winkelkopf mit einem um eine Rotationsachse (14) drehangetriebenen Bearbeitungswerkzeug (5) ausgebildet ist, und daß der Werkzeugkopf (12) mittels eines Schwenkgelenks relativ zu der Halterung um die Rotationsachse (14) des Bearbeitungswerkzeugs (5) verschwenkbar mit der Halterung (6) verbunden ist.

8. Bausatz nach einem der Ansprüche 1 bis 7, **dadurch gekennzeichnet, daß** die Schiebeführung seitlich beidseits des Schlittenteils (10) jeweils wenigstens eine an der Halterung (9) fixierte Führungsleiste (11) zum Führen des Schlittenteils (10) aufweist, und daß die Führungsleisten (11) zum verschiebbaren und drehbaren Führen des Schlittenteiles (10) in eine gemeinsame, am Außenumfang des Schlittenteiles (10) angeordnete Ringnut (15) oder in mehrere, an einander abgewandten Außenumfangsbereichen des Schlittenteiles (10) diametral gegenüberliegend angeordnete Ringnutabschnitte eingreifen.

9. Bausatz nach einem der Ansprüche 1 bis 8, **dadurch gekennzeichnet, daß** die Halterung (6) mindestens zwei in Erstreckungsrichtung der Halterung (6) versetzt zueinander angeordnete Auflagestellen (17) für die Kaufläche wenigstens eines mit der Halterung (6) zu verbindenden Zahnes aufweist und daß mindestens eine dieser Auflagestellen (17) an einem Abstandshalter (16) angeordnet ist, der quer zur Ebene der Kaufläche relativ zu der Positioniereinrichtung (7) verstellbar ist.

10. Bausatz nach Anspruch 1, **dadurch gekennzeichnet, daß** die beidseits des Brückenteils (20) befindlichen Verankerungsvorsprünge (19) wenigstens eine gleiche Abmessung aufweisen.

11. Bausatz nach Anspruch 1 oder 10, **dadurch gekennzeichnet, daß** die dem Brückenteil (20) abgewandte seitliche Abschlußfläche (21) des Verankerungsvorsprungs (19) auf einer Zylinderfläche oder einer Kegelmantelfläche eines Kegelstumpfs liegt, der sich ausgehend von der Kaufläche des Kunstzahnes zum Zahnhals hin verjüngt.

12. Bausatz nach einem der Ansprüche 1 oder 10 oder 11, **dadurch gekennzeichnet, daß** wenigstens ein Verankerungsvorsprung (19) durch das freie Ende eines in eine Lochung der Zahnbrücke (4) eingesetzten Haltestifts gebildet und/oder einstückig mit dem Brückenteil verbunden ist.

13. Bausatz nach einem der Ansprüche 1 oder 10 bis 12, **dadurch gekennzeichnet, daß** er mehrere vorkonfektionierte Zahnbrücken (4) mit Kunstzähnen unterschiedlicher Farben, Materialien und/oder Abmessungen aufweist.

## Claims

1. Kit for producing a dental bridge, **characterised by** a device (1) for treating neighbouring teeth (2) adjacent to a gap (3) in order to fit a dental bridge (4) that replaces at least one missing tooth, comprising a treatment tool (5) for removing tooth material, particularly a grinding tool, and a mounting fixture that can be fastened to the patient's teeth on which is mounted an adjustable positioning device (7) for positioning the treatment tool (5) in guided manner, said positioning device having a sliding guide with a sled (10) mounted to be movable along guide rails (11) or guide rods relative to the mounting fixture (6), said sled guiding the treatment tool (5), the mounting fixture (6) comprising, for the purpose of fastening to teeth located on both sides of the gap (3), at least two retaining sections which are located on both sides of the treatment tool (5), each being capable of being fastened to at least one tooth, and the retaining sections being connected together by the guide rails (11) or guide rods so that the treatment tool (5) can be moved toward or away from the neighbouring teeth (2) to make holding recesses (8) in the sides of the neighbouring teeth (2) facing the gap (3), and at least one prefabricated dental bridge (4) with a bridge section (20), this dental bridge (4) comprising at least one anchoring projection (19) of prescribed dimensions on each side of the bridge section (20) in the direction in which it extends, and in that the dimensions of the holding recesses correspond to those of the anchoring projections of the dental bridge.

2. Kit according to claim 1, **characterised in that** stops (18) are provided on the mounting fixture (6) on both sides of the sled (10) to limit the positioning travel of the treatment tool (5) in the direction of movement of the sled (10).

3. Kit according to claim 1 or 2, **characterised in that** the mounting fixture (6) has at least one approximately U-shaped retaining section (9) which, in the position of use, grasps at least one of the patient's teeth, particularly a tooth adjacent to the gap, in the manner of a yoke.

4. Kit according to claim 3, **characterised in that** a hardening and/or solidifying compound is provided to coat the interior space of the approximately U-shaped retaining section (9).

5. Kit according to one of claims I to 4, **characterised in that** the treatment tool (5) is located at the tool head (12) of dental treatment equipment and that this tool head (12) can be removably connected to the sled (10) of the sliding guide.

6. Kit according to one of claims 1 to 5, **characterised in that** the sled (10) has a receptacle (12a) that fits the shape of the tool head of the dental treatment equipment, into which the tool head (12) can be inserted to engage interlockingly therein, and **in that** the receptacle (12a) preferably forms a press fit together with the tool head.

7. Kit according to one of claims 1 to 6, **characterised in that** the tool head (12) is designed as an angled head with a treatment tool (5) that is rotated about a rotation axis (14), and **in that** the tool head (12) is connected to the mounting fixture (6) by means of a swivel joint allowing it to rotate about the rotation axis (14) of the treatment tool (5) relative to the mounting fixture.

8. Kit according to one of claims 1 to 7, **characterised in that** the sliding guide has at least one guide rail (11) fixed to the holder (9) on each side of the sled (10) to guide the sled (10) and **in that** the guide rails (11) for guiding the sled (10) in a sliding and rotatable manner engage in a common annular groove (15) on an outer perimeter of the sled (10) or in a number of annular groove sections located at exterior perimeter areas of the sled (10) diametrically opposite one another.

9. Kit according to one of claims 1 to 8, **characterised in that** the mounting fixture (6) has at least two points of support (17) offset from one another in the direction that the mounting fixture (6) extends for the chewing surface of at least one tooth which is to be connected to the mounting fixture (6), and **in that** at least one of these points of support (17) is located on a spacing element (16) that is adjustable perpendicular to the plane of the chewing surface relative to the positioning device (7).

10. Kit according to claim 1, **characterised in that** the anchoring projections (19) located on both sides of the bridge section (20) are the same in at least one dimension.

11. Kit according to claim 1 or 10, **characterised in that** the abutting surface (21) of the anchoring projection (19) remote from the bridge section (20) is located on a cylindrical surface or an outer conical surface of a truncated cone that narrows from the chewing surface of the artificial tooth to the base of the tooth.

12. Kit according to one of claims 1 or 10 or 11, **characterised in that** at least one anchoring projection (19) is formed by the free end of a locking pin placed in a hole in the dental bridge (4) and/or is formed in one piece with the bridge section.

13. Kit according to one of claims 1 or 10 to 12, **characterised in that** it comprises a plurality of pre-manufactured dental bridges (4) with artificial teeth of different colours, materials and/or dimensions.

## Revendications

1. Ensemble pour réaliser un bridge dentaire, **caractérisé par** un dispositif (1) pour traiter les dents voisines (2) d'un vide entre dents (3) pour la pose d'un bridge dentaire (4) remplaçant au moins une dent manquante, comprenant un instrument de traitement (5) pour enlever de la matière dentaire, en particulier une meule, et un support pouvant être fixé sur les dents du patient, sur lequel est disposé un dispositif de positionnement réglable (7) pour positionner l'instrument de traitement (5) en le guidant, lequel dispositif de positionnement comporte un guidage coulissant avec une pièce coulissante (10) montée de manière mobile relativement au support (6) sur des barres de guidage ou des tiges de guidage (11), ladite pièce coulissante (10) guidant l'instrument de traitement (5), le support (6) à fixer sur des dents situées de part et d'autre du vide entre dents (3) présentant au moins deux zones de fixation disposées de part et d'autre de l'instrument de traitement (5) pouvant être reliées chacune avec au moins une dent, et ces zones de fixation étant reliées entre elles par les barres de guidage (11) ou tiges de guidage de telle manière que l'instrument de traitement (5) servant à pratiquer des cavités de logement ou de réception (8) dans les faces des dents voisines (2) tournées vers le vide entre dents (3) est mobile vers les dents voisines et à partir de celles-ci, et par au moins un bridge dentaire pré-confectionné ou réalisé au préalable (4) avec une partie de bridge (20), ce bridge dentaire (4) présentant dans la direction d'extension, de part et d'autre de la partie bridge (20), au moins une saillie d'ancrage (19) avec des dimensions prédéterminées et les dimensions des cavités de logement correspondant à celles des saillies d'ancrage du bridge dentaire.

2. Ensemble selon la revendication 1, **caractérisé en ce que**, pour limiter le chemin de positionnement de l'instrument de traitement (5) dans la direction de déplacement de la pièce coulissante (10), des butées (18) sont prévues sur le support (6) de part et d'autre de la pièce coulissante (10).

3. Ensemble selon la revendication 1 ou la revendication 2, **caractérisé en ce que** le support (6) comporte au moins une pièce de fixation (9) en forme de U qui, en position d'utilisation, recouvre au moins une dent du patient à la manière d'un étrier ou d'une fourche, en particulier une dent adjacente au vide entre dents (3).

4. Ensemble selon l'une quelconque des revendications 1 à 3, **caractérisé en ce que**, pour garnir le creux intérieur de la pièce de support en forme de U (9), il est prévu une masse de remplissage durcissante et/ou se solidifiant.

5. Ensemble selon l'une quelconque des revendications 1 à 4, **caractérisé en ce que** l'instrument de traitement (5) est disposé sur la tête d'instrument (12) d'un dispositif de traitement dentaire et **en ce que** cette tête d'instrument (12) est reliée de manière séparable à la pièce coulissante (10) du guidage coulissant.

6. Ensemble selon l'une quelconque des revendications 1 à 5, **caractérisé en ce que** la pièce coulissante (10) présente un logement (12a) adapté à la forme de la tête d'instrument (12) du dispositif de traitement dentaire, logement dans lequel la tête d'instrument (12) peut être insérée par engagement positif et **en ce que** le logement (12a) forme avec la tête d'instrument de préférence un ajustement serré.

7. Ensemble selon l'une quelconque des revendications 1 à 6, **caractérisé en ce que** la tête d'instrument (12) est conçue comme une tête angulaire avec un instrument de traitement (5) entraîné en rotation autour d'un axe de rotation (14) et **en ce que** la tête d'instrument (12) est reliée au moyen d'une articulation pivotante au support (6) de manière à pouvoir pivoter relativement au support autour de l'axe de rotation (14) du l'instrument de traitement (5).

8. Ensemble selon l'une quelconque des revendications 1 à 7, **caractérisé en ce que** le guidage coulissant comporte latéralement de part et d'autre de la pièce coulissante (10) au moins une barre de guidage (11) fixée sur le support (9) pour guider la pièce coulissante (10) et **en ce que** les barres de guidage (11) s'engagent dans une rainure annulaire commune (15) disposée sur la périphérie extérieure de la pièce coulissante (10) ou dans plusieurs segments de rainure annulaire disposés de manière diamétralement opposée l'un à l'autre sur des zones de périphérie extérieure opposées les unes aux autres de la pièce coulissante (10).

9. Ensemble selon l'une quelconque des revendications 1 à 8, **caractérisé en ce que** le support (6) présente au moins deux points d'appui (17) pour les surfaces de mastication d'au moins une dent à relier au support (6) disposés décalés l'un par rapport à l'autre dans la direction d'extension du support et **en ce qu'**au moins un de ces points d'appui (17) est disposé sur un écarteur ou entretoise (16) qui est réglable transversalement au plan de la surface de mastication par rapport au dispositif de positionnement (7).

10. Ensemble selon la revendication 1, **caractérisé en ce que** les saillies d'ancrage (19) se trouvant de part et d'autre de la partie de bridge (20) présentent au moins une dimension identique.

11. Ensemble selon la revendication 1 ou 10, **caractérisé en ce que** la surface terminale latérale (21) de la saillie d'ancrage (19) opposée à la partie de bridge (20) est située sur une surface cylindrique ou une surface latérale conique d'un tronc de cône qui se rétrécit à partir de la surface de mastication de la dent artificielle vers le collet de dent.

12. Ensemble selon l'une des revendications 1 ou 10 ou 11, **caractérisé en ce qu'**au moins une saille d'ancrage (19) est formée par l'extrémité libre d'une tige de fixation insérée dans un perçage du bridge dentaire (4) et/ou reliée d'un seul tenant à la partie de bridge.

13. Ensemble selon l'une des revendications 1 ou 10 ou 12, **caractérisé en ce qu'**il comporte plusieurs bridges dentaires pré-confectionnés (4) avec des dents artificielles de différentes couleurs, matières et/ou dimensions.
